# EUROPEAN PATENT APPLICATION

(11) **EP 4 287 147 A1**
(43) Date of publication of application: **06.12.2023**
(21) Application number: 22176208.1
(22) Date of filing: 30.05.2022
(51) Int. Cl.: G06V 20/58, G06V 20/56, G06V 10/82, G06V 10/20, G06V 10/44, G06N 3/04

(54) **TRAINING METHOD, USE, SOFTWARE PROGRAM AND SYSTEM FOR THE DETECTION OF UNKNOWN OBJECTS**

(71) Applicant: Kopernikus Automotive GmbH, 04179 Leipzig (DE)
(72) Inventor: KALE, Pragya, 13082 Berlin (DE); JENZOWSKY, Stefan, 91325 Adelsdorf (DE)
(74) Representative: Seemann & Partner Patentanwälte mbB

(57) **Abstract**

Abstract

(in connection with Fig. 1)

The present invention concerns a training method, a method, a software program and a system for the detection of unknown objects, in particular for autonomous driving, autonomous manoeuvring or automated valet parking (AVP).

The training method for the detection of unknown objects in a real-word environment, in particular for autonomous driving, autonomous manoeuvring or automated valet parking, comprises the following steps:
a) collecting an image dataset including both images that contain objects to be detected as well as images that do not contain any objects to be detected, including images with random unknown objects,
b) labelling the collected images, wherein both known and unknown objects are labelled in all the images of the dataset according to their respective class or classes, the respective class or classes including or consisting of a class for unknown objects, and their location in the respective image, and
c) training a convolutional neural network (CNN) with the collected and labelled image dataset.

## Description

The present invention concerns a training method, a method, a software program and a system for the detection of unknown objects, in particular for autonomous driving, autonomous manoeuvring or automated valet parking (AVP).

In the past, systems and methods have been developed that allow to drive or move a vehicle or robot, e.g. as an autonomous vehicle, both in the field of automated driving (e.g. on a highway) as well as autonomous parking and maneuvering. Such systems rely either on on-board sensors alone (AVP type1), on static environmental off-board sensors (AVP type 2) or on a combination of on-board and off-board sensors (AVP type 3, the AVP types being according to the proposed ISO 23374 norm).

These methods and systems often rely on sensors like cameras (photographic or video) or laser scanner based LIDAR sensors (LIDAR = Light Detection And Ranging). In order to determine if an object is in the projected drive path of a vehicle or the motion path of a robot, these methods and systems often rely on trained neural networks for the analysis of the sensor data and the perception of persons, vehicles, and other obstacles.

Such neural networks are usually trained in several iterations based on catalogues of data (e.g. image libraries). Such data includes images of the objects to be trained for as well as annotations (labels) for the classification and location or, respectively, coordinates of those objects in the images. The label configuration may include a list of known objects along with the format and units of measurement of the labels. This training enables the trained neural networks to reliably identify objects in a picture or video derived from a camera sensor or a point cloud derived from a LIDAR scanner, when such objects have been included and labelled according to their classification in the annotated training library.

For the purpose of the present disclosure, the general term "image" denotes the data that contains information of an unknown object to be detected. It may consist of, e.g., single or multiple 2D or 3D images, photographs, drawings, video, video stream, video streams, point cloud, or similar. In particular, it includes both pictures or videos made by optical cameras and point clouds or other representations provided by scanners such as LIDAR, and can refer also to polygon meshes or other forms of representation of a real-world environment data not specifically mentioned here.

The process of annotating such data is important for this task. As there are supervised and self-supervised systems available, the supervision of such training may be performed by humans or A. I.-based systems themselves.

Optimization based known object detection and classification systems include the state of the art, most accurate and most scalable object detection systems of the present. Some of the examples are YOLO (you only look once), Retina-net, R-CNN (region based CNN), among others.

However, this method is flawed. It works well for known objects having a known classification, since it is based on the assumption that an object is known, and the neural net is specifically trained for its detection, resulting in a high degree of reliability in the detection of this type of object. Human drivers of robots or automobiles, however, can cope with unknown objects, even with objects that the human driver has never seen before. Neural networks trained according to the above described lack this capability.

Alternative methods for detection of unknown objects in a video sequence rely on the motion or movement of such objects or related methods such as motion vectors, luminescence coefficients, pixel shifting, object shifting, or similar. However, for this method to work, a video sequence or a data sequence over time (e.g. point cloud over time) is necessary.

Background-foreground classification represents an existing alternative approach for unknown object detection. However, it often does not include a true object detection and can easily be misled, e.g. by shadowing, water ponds, etc.

Applications like automated highway driving or autonomous maneuvering or automated valet parking frequently encounter recurring objects that need to be detected. Such recurring types of objects like people or other vehicles may constitute 99% or more of all encountered objects. Still, there may be objects appearing suddenly that have never been trained for, annotated or classified, such as a tepee tent, a snowman or a bizarrely shaped tree or rock that has fallen on the road. In such rare cases, the approach of using a trained library for object detection is dangerous, as it does not guarantee that the object in the motion path will be perceived. In the worst case, an autonomous vehicle driving on an Artificial Intelligence based guiding system based on trained neural networks could crash into such rarely occurring obstacles, with possibly devastating consequences.

In this light, it is an object of the present invention to provide for improved real-world object detection for unknown objects, in particular in the applications of autonomous driving, autonomous manoeuvring and/or automated valet parking.

In one aspect of the present disclosure, this object is achieved by a training method for the detection of unknown objects in real-word environments, in particular for autonomous driving, autonomous manoeuvring or automated valet parking, comprising the following steps:
a) collecting an image dataset including both images that contain objects to be detected as well as images that do not contain any objects to be detected, including images with random unknown objects,
b) labelling the collected images, wherein both known and unknown objects are labelled in all the images of the dataset according to their respective class or classes, the respective class or classes including or consisting of a class for unknown objects, and their location in the respective image, and
c) training a convolutional neural network (CNN) with the collected and labelled image dataset.

A thus-trained CNN will detect unknown objects as well as, as the case may be, known objects from a single input image, using optimization based known object detection systems.

In the context of the present disclosure, a predefined set of objects which are established before the course of training the neural network are referred to as "known objects". Objects which are not predefined, cannot be classified by the known object detection system and are not a part of the regular environment. These are referred to as "unknown objects".

The training method according to the present invention represents a new approach to the detection of unknown objects in a real-world environment based on known methods for training CNN's, wherein the traditional training for the classification of known objects is complemented with or replaced by an overall class for unknown objects in combination with the addition of images that do not display any objects to be detected. The CNN is fully or partially trained or re-trained with this new set of training data and the new classification scheme. The training can have the form of fine-tuning, wherein the convolutional base of the CNN is kept fully or at least largely frozen such that it does not participate in the retraining, whereas the part of the neural network that provides the categorization is fully or partially unfrozen and optimized using the new training data set.

Within the training method, the CNN is trained using similar inputs for training as before, but with the addition of classification and coordinates for unknown objects. For this purpose, the loss functions of the architecture are exploited in such a way that the CNN learns foreground-background classification using the features in the image that portray a labelled object and the features that are portrayed by the background in that image i.e. space in the image where there nothing is labelled as an object. All this may take place along with learning classification and detection of known objects.

During inference, an Unknown Object Detection System based on the CNN trained according to the above method will take in a single image and give out position and classification of unknown and, if applicable, known objects on the image.

The combination of the introduction of the "unknown objects" class and the use of images having no objects to be detected in the training dataset has the synergetic effect of making it possible to train the CNN towards recognizing something as an object that needs to be detected, although the CNN has not been trained to detect the specific type of object it represents.

Under normal circumstances, trained CNN's are neither expected nor meant to recognize objects that they have not been trained and optimized for. The traditional training uses images displaying various instances of such objects that have been labelled with the same classifier, so that the CNN will be told that these objects all belong to the same classification. For example, the class "cat" will have a wide variety of cats of different appearances, in different poses, under different light conditions, and so on, so that the training will teach the CNN to recognize cats by their most prominent and common features.

Since there is a plurality of features that, in their combination, are indicative of cats, not all of the features will have to be present in the image of the cat in order for the CNN to recognize it as a cat.

However, with the open-ended variety of possible real-world unknown objects, there is no expectation that they will even display any common set of specific features. The CNN's perception of an unknown object will therefore lack the presence of such distinctive features that would otherwise be indicative of a known object.

Still, such unknown objects have to be discriminated from the image background. However, even the background of an image might not be empty and featureless. In fact, in most real-world applications such as autonomous driving or maneuvering or automated valet parking, the background will not be empty.

By introducing images into the training data set that do not contain any objects to be detected, even unknown objects, the CNN is taught to better discriminate between background and any objects displayed therein. In other words, the CNN has been taught in its "unknown object" class to differentiate between an image background and objects standing out from the background. This in turn improves the reliability of the object detection even in the case of classifying previously unknown objects without prior knowledge of their features into the "unknown object" class.

In embodiments, the CNN used in the training of step c) is a CNN that has been pre-trained for categorizing objects in the images into a plurality of pre-defined known object classes. Using a pre-trained CNN means that the adaption of the presently presented training method requires a training image dataset that may be much smaller than the original known object classification training dataset. It also means that some or all of the pre-defined classes of known objects can be retained during the further training.

In embodiments, the training is done using a loss function and/or cost function that includes a modulating term focussed on hard to classify or miss-classified examples of the dataset. Such a modulating introduces an attractor for the optimization that consolidates the reliability of unknown object detection.

In further embodiments with a pre-trained CNN, in the training step c), all, a subset of or none of the pre-defined known object classes are retained, and/or one or more additional known object classes are added. Preferably, such known object classes are retained that have application use case of the CNN, such as autonomous driving or manoeuvring or automated valet parking. Useful classes to be retained may include, for example, and not exclusively, vehicles, people, animals, traffic signs or other objects relevant for these applications that require reactions specific to the particular class of objects that the detected object belongs to. For example, a car should not run a red traffic light or a stop sign. It should also avoid collisions with other vehicles or pedestrians, and it may be necessary to set priorities such as for example that the avoidance of a pedestrian is to be valued higher than the avoidance of an animal or an inanimate object.

In an embodiment, the CNN used in the training of step c) is a CNN that has been pre-trained for categorizing objects in the images into a plurality of pre-defined known object classes. Such a pre-trained CNN will only have to be fine-tuned with the new training data set. Thereby, the optimization is based on known object detection systems that are already optimized for determining the location, size and classification of known objects based on the features these objects portray on training images.

In embodiments, the CNN is trained fully or partially in step c) of this agreement, in particular fine-tuned, wherein in particular a convolutional base of the CNN is left fully or mostly frozen, whereas a classifier part of the CNN is fully or partially unfrozen and optimized with the collected and labelled image dataset. The partial training of the CNN is mostly done on the output side layers of the CNN. If only such layers of the CNN are unfrozen for the training that belong to the classifier section, which usually comprises several fully connected layer of neurons, the accuracy and reliability of known object detection can be preserved. However, it can be beneficial to unfreeze a few of the output side convolutional layers of the convolutional base for the training to practice feature extraction with the goal of extracting features that are more indicative of unknown objects, along with fine-tuning. This combination of feature extraction and fine-tuning may have a somewhat negative impact on the accuracy and reliability of known object detection, which may be weighed against the added benefit of successful unknown object detection.

In some embodiments of the training method, in step a), seen over the plurality of images that contain objects to be detected, the labelled objects to be detected collectively cover most or all regions of the images and/or are preferably evenly distributed over the images. This distribution of the objects to be detected prevents the CNN from developing the bias towards certain regions, where it would otherwise expect objects to occur, whereas otherwise, it would even more objects that occur in areas of an image where the training image data set was devoid of labelled objects.

For the purpose of the above-described training, the images of the image dataset preferably originate from the cameras that will be used for image detection, or from cameras of the same type. With this choice of image sources, the training image data set is perfectly matched to the real world images that are used for interference, that is unknown object detection as well as, if applicable, known object detection, later on, for the specific applications for which the CNN has been trained. This provides for superior detection accuracy and reliability.

In embodiments, the training images are captured with static cameras. In applications such as automated valet parking, the external cameras are usually static, and unknown object detection benefits from the static character of the images.

Especially in static application cases such as automated valet parking, the training can customize the CNN for a specific application and location by using images from the same cameras and the same camera locations as training image dataset as are used for capturing images for unknown object detection afterwards. This has the added benefit that the background of the images is the actual background in the parking facility as seen by the respective cameras.

In another aspect of the present disclosure, the object is achieved by a use of a CNN that has been trained using an above-described training method for detecting unknown objects in a real-word environment, in particular for autonomous driving, autonomous manoeuvring or automated valet parking. The use of the CNN resulting from the above-described training method embodies the same features, advantages and characteristics as the above-described training method.

In a further embodiment, the CNN is additionally used for detecting known objects in the real-world environment.

In yet another aspect of the present disclosure, the object is achieved by a software program with program code means, in particular stored on non-erasable data storage means or in a random access memory of a computing device, comprising a CNN that has been trained using an above-described training method for detecting unknown objects in a real-word environment, in particular for autonomous driving, autonomous manoeuvring or automated valet parking, and comprising software program code designed to carry out unknown object detection on input images by inference using the CNN, wherein in particular the software program code is additionally designed to carry out known object detection on input images by inference using the CNN. The software program thereby embodies the same features, advantages and characteristics as the above-described training method.

In a further embodiment, the software program code is additionally configured to combine the trained CNN based unknown object detection with further methods for unknown object detection, in particular background comparison, background detection.

In yet another aspect of the present disclosure, the object is achieved by a system for the detection of unknown objects in a real-word environment, in particular for autonomous driving, autonomous manoeuvring or automated valet parking, comprising one or more of a camera device or camera devices and a LIDAR device or LIDAR devices designed to provide input images of a real-world environment, and a computing device running an above-described software program with program code means, providing unknown object detection on the input images, and in particular additionally providing known object detection on the input images. The system thereby embodies the same features, advantages and characteristics as the above-described training method and software program.

In a further embodiment of the system, at least one camera device and/or LIDAR device is statically mounted, and/or at least one camera device and/or LIDAR device is mounted in or on a vehicle. Vehiclemounted cameras or LIDAR scanners are needed for autonomous driving and manoeuvring, as well as type 1 AVP (automated valet parking), whereas static sensors enable type 2 AVP and, in combination with vehicle mounted sensors, type 3 AVP.

In embodiments, the system additionally comprises a control device in data connection or integral with the computing device, the control device being equipped to control the movement of a vehicle and to take account of the detection of unknown and/or known objects in the control of the movement of the vehicle.

Further characteristics of the invention will become apparent from the description of the embodiments according to the invention together with the claims and the included drawings. Embodiments according to the invention can fulfil individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic of a system and training method according to the present disclosure,
- Fig. 2: a schematic diagram of a method of perception of an unknown object from a single image
- Fig. 3: a schematic diagram of a method of perception of an unknown object from multiple images,
- Fig. 4: an example of a perception of unknown objects in a real-world environment,
- Fig. 5: a combination of methods for the perception of an unknown object.

In the drawings, the same or similar types of elements or respectively corresponding parts are provided with the same reference numbers in order to prevent the item from needing to be reintroduced.

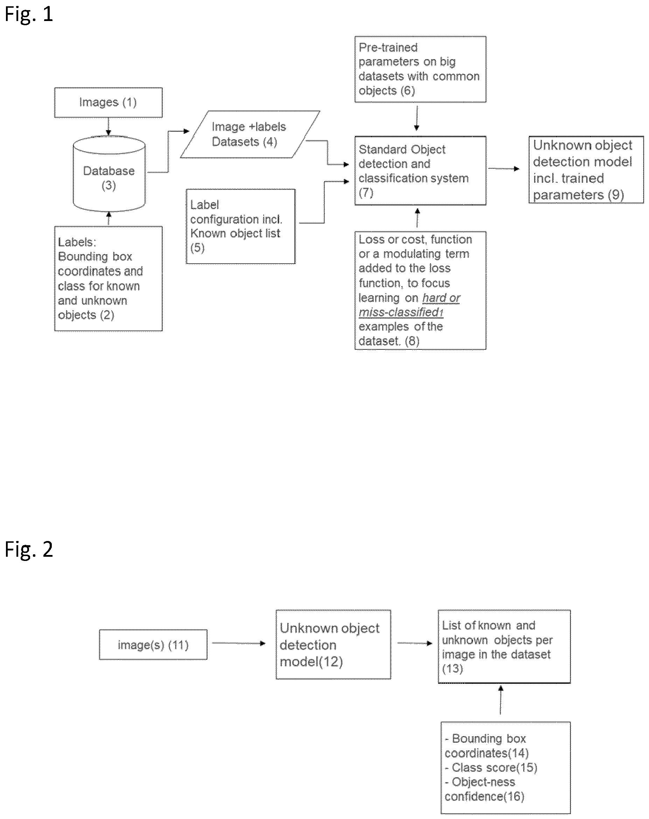

Fig. 1 displays a schematic of a system and training method according to the present disclosure. The system comprises a database 3 that is a collection of images 1 and corresponding annotations or labels 2 relevant to the environment for which the unknown object detection system is intended. The labels 2 may comprise coordinates for bounding boxes and classes for unknown objects shown in the images 1 and possibly for known objects as well. The images 1 may also comprise images that only display the background, without any known or unknown objects that should be detected. These images do not have correspondent object labels associated with them.

The images 1 and labels 2 are combined into a training dataset 4 that is fed into a standard object detection and classification system 7, possibly along with a label configuration comprising a list of known objects along with the format and units of measurements of labels.

Further inputs into the standard object detection and classification system 7 are pre-trained parameters of a CNN to be trained. The CNN had been trained on data sets with common objects. This part may be identical to known approaches of object detection based on trained neuronal networks. Usually this contains large data sets. Another input is a loss function and/or cost function 8 that may include a modulating term added to the loss function that is focused on hard to classify or miss-classified examples of the data set.

The optimization itself proceeds according to known methods and results in an unknown object detection model 9 with trained parameters, thereby providing the capability of highly reliable unknown object detection, possibly accompanied by highly reliable known object detection as well.

Fig. 2 shows a schematic diagram of a method of perception of an unknown object from a single image. In step 11, a single instance of an image to be subjected to unknown object detection is captured as input data. It may consist of e.g. 2D image, 3D image, photographs, drawings or similar.

In step 12, the unknown object detection model utilizing trained parameters is applied on the input data in order to carry out unknown object detection. A list of unknown, and, if applicable, known objects is output in step 13 as result of the unknown object detection. This is accompanied by more information regarding the detected objects, such as bounding box coordinates 11 indicating perceived object location on the image and classification scores indicating the confidence level and/or level of certainty of classification as a known or unknown object, and as a certain object kind, if it is a known object. In this context, the confidence and/or certainty of classification as an object may also be called an "object-ness".

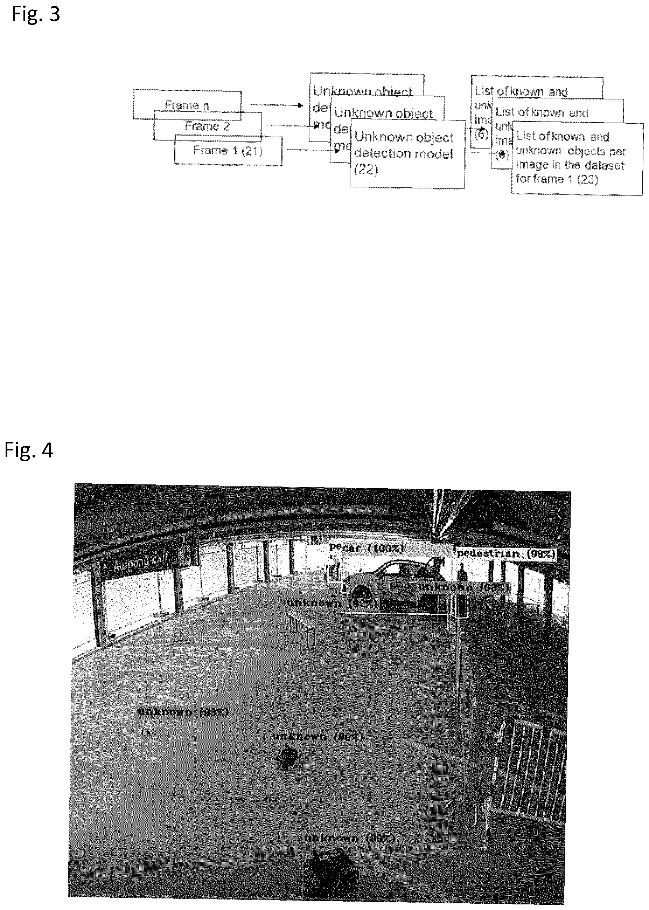

The schematic diagram of a method of perception of an unknown object from multiple images shown in Fig. 3 starts with multiple frame instances 1, 2, ... n in step 21. These multiple instance input data are the data that contain information of an unknown object. It may consist of e.g. 2D images, 3D images, video streams, or similar. An unknown object detection using the unknown object detection model trained according to the present disclosure is applied to the individual instances of input images in step 22. This results in a list of known and unknown objects per image in the dataset in step 23. The unknown object detection model functions without knowledge of past data in the video stream to detect known and/or unknown objects.

Fig. 4 shows an example of a perception of unknown objects in a real-world environment, in the present case, an indoor parking facility, using a CNN that was trained according to the presently disclosed training method. The image is a frame grabbed from a video stream of a surveillance camera mounted statically inside the indoor parking facility. A good separation for object detection is achieved, with various objects distributed randomly on the floor in the foreground and middleground. In the further middleground, a vehicle and two pedestrians are detected as known objects including their classification. All detected objects are provided with a bounding box and a confidence level. As can be seen, all objects in the foreground and middleground are identified as unknown objects with confidence levels > 90%. Welltrained known objects such as the vehicle or pedestrians are recognized with very high confidence levels of 98% or more, even if they are at a further remove.

The fencing elements are ignored, since the CNN has been trained with images including the fencing elements, but no labelling. For the purpose of the training, the fencing elements were treated as forming part of the background.

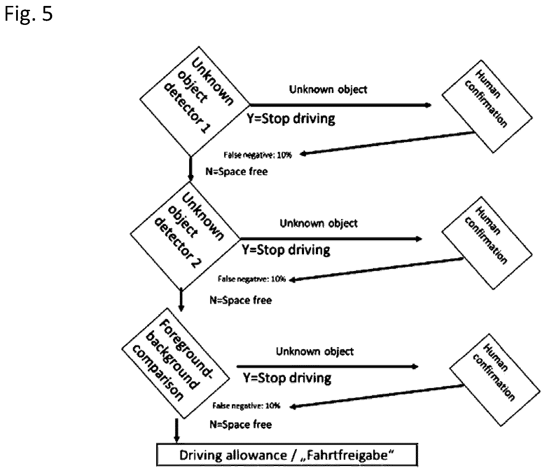

In Fig. 5, a combination of methods for the perception of an unknown object is shown. The combined system includes three independent systems that are all geared towards unknown object detection. The first unknown object detector is of the type that was trained according to the present disclosure. If this first unknown object detector detects an object (case "Y"), a command is issued to stop driving.

If the first unknown object detector does not detect any objects, it declares the space free (case "N"). There may be a false negative rate (rate of instances in which a real object remains undetected) and/or a false positive rate (rate of instances wherein an object is detected where there is no object to be detected) of, e.g., 10% associated with the first unknown object detector.

This may be followed in essentially the same form including human intervention by a second unknown object detector that may be trained differently or may be based on an entirely different unknown object detection philosophy, as well as third system, which may be implemented as a foreground-background-comparison model. In the simplest case, a driving allowance is issued if all three of the detectors signal that the space is free of objects.

Each of the stop driving commands or the driving allowances of the combined system or its stages may be subject to confirmation by a human operator, such as a vehicle driver or an automated valet parking supervisor, who may override a stop driving command or a driving allowance.

Each of the three independent stages or, respectively, detectors, may be associated with their own false negative rate and/or false positive rate. In the aggregate, even moderate false negative rates of the individual detectors combine into a very small false negative rate of the combined system. Furthermore, in order to reduce the overall false positive rate, positive findings of the three models may be combined to require either a high confidence in an individual of the three detectors, or a majority of two of the three detectors for the same object, if the confidence level is somewhat lower, or even a triple positive for even lower confidence levels. The parameters going into this balancing may be optimized to minimize both false positives and false negatives.

The balance may be adjusted to account for the absence or presence of a human operator. In the case of the absence of a human operator, a false negative resulting in an erroneous driving allowance is potentially more harmful than a false positive. Therefore, the balance will have to be safety-oriented and weighed towards lower false negative rates. In the case of the presence of a human operator, however, the balance can be tilted towards somewhat lower false positive rates for an improved operation experience.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features that are combined with the wording "in particular" or "especially" are to be treated as preferred embodiments.

## Claims

1. Training method for the detection of unknown objects in a real-word environment, in particular for autonomous driving, autonomous manoeuvring or automated valet parking, comprising the following steps:
a) collecting an image dataset including both images that contain objects to be detected as well as images that do not contain any objects to be detected, including images with random unknown objects,
b) labelling the collected images, wherein both known and unknown objects are labelled in all the images of the dataset according to their respective class or classes, the respective class or classes including or consisting of a class for unknown objects, and their location in the respective image, and
c) training a convolutional neural network (CNN) with the collected and labelled image dataset.

2. The training method according to claim 1, **characterized in that** the CNN used in the training of step c) is a CNN that has been pre-trained for categorizing objects in the images into a plurality of pre-defined known object classes, wherein in particular in the training step c), all, a subset of or none of the pre-defined known object classes are retained, and/or one or more additional known object classes are added.

3. The training method according to claim 1 or 2, **characterized in that** the training is done using a loss function and/or cost function that includes a modulating term focussed on hard to classify or miss-classified examples of the dataset.

4. The training method according to one of claims 1 to 3, **characterized in that** in step c), the CNN is trained fully or partially, in particular fine-tuned, wherein in particular a convolutional base of the CNN is left fully or mostly frozen, whereas a classifier part of the neural network is fully or partially unfrozen and optimized with the collected and labelled image dataset.

5. The training method according to one of claims 1 to 4, **characterized in that** in step a), seen over the plurality of images that contain objects to be detected, the labelled objects to be detected collectively cover most or all regions of the images and/or are evenly distributed over the images.

6. The training method according to one of claims 1 to 5, **characterized in that** images of the image dataset originate from the cameras that will be used for image detection, or from cameras of the same type.

7. The training method according to one of claims 1 to 6, **characterized in that** the training images are captured with static cameras.

8. The training method according to one of claims 6 or 7, **characterized in that** the CNN is customized for a specific application and location by using images from the same cameras and the same camera locations as training image dataset as are used for capturing images for unknown object detection afterwards.

9. Use of a CNN that has been trained using a training method according to one of claims 1 to 8 for detecting unknown objects in a real-word environment, in particular for autonomous driving, autonomous manoeuvring or automated valet parking.

10. Use of a CNN according to claim 9, **characterized in that** the CNN is additionally used for detecting known objects in the real-world environment.

11. Software program with program code means, in particular stored on non-erasable data storage means or in a random access memory of a computing device, comprising a CNN that has been trained using a training method according to one of claims 1 to 8 for detecting unknown objects in a real-word environment, in particular for autonomous driving, autonomous manoeuvring or automated valet parking, and comprising software program code designed to carry out unknown object detection on input images by inference using the CNN, wherein in particular the software program code is additionally designed to carry out known object detection on input images by inference using the CNN.

12. Software program according to claim 11, **characterized in that** its software program code is additionally designed to carry out known object detection on input images by inference using the CNN.

13. System for the detection of unknown objects in a real-word environment, in particular for autonomous driving, autonomous manoeuvring or automated valet parking, comprising one or more of a camera device or camera devices and a LIDAR device or LIDAR devices designed to provide input images of a real-world environment, and a computing device running a software program with program code means according to claim 11 or 12, providing unknown object detection on the input images, and in particular additionally providing known object detection on the input images.

14. System according to claim 13, **characterized in that** at least one camera device and/or LIDAR device is statically mounted, or that at least one camera device and/or LIDAR device is mounted in or on a vehicle.

15. System according to claim 13 or 14, **characterized in that** it additionally comprises a control device in data connection or integral with the computing device, the control device being equipped to control the movement of a vehicle and to take account of the detection of unknown and/or known objects in the control of the movement of the vehicle.
